# EUROPÄISCHE PATENTANMELDUNG

(11) **EP 1 775 812 A1**
(43) Veröffentlichungstag der Anmeldung: **18.04.2007**
(21) Anmeldenummer: 06021408.7
(22) Anmeldetag: 12.10.2006
(51) Int. Cl.: H02G 3/04, E06C 9/02

(54) **Kalbelstütze**

(30) Priorität: 14.10.2005 DE 102005049289
(71) Anmelder: Zarges Aluminium Systeme GmbH, 82362 Weilheim (DE)
(72) Erfinder: Pfleger, Stefan, D-86492 Egling (DE)
(74) Vertreter: Baronetzky, Klaus

(57) **Zusammenfassung**

Die Erfindung betrifft eine Kabelstütze, insbesondere für die Abstützung der Generatorkabel von Windkraftanlagen, mit einer Stützleiter, die mehrere Einzelleitern aufweist, die je für sich gelagert sind. Die Einzelleiter (24) ist als Hängeleiter oben an einer Aufhängung (30) aufgehängt. Bevorzugt ist sie unterhalb der Aufhängung (30), insbesondere nahe ihres unteren Endes (44), über eine Horizontalabstützung (40) gegen Horizontalkräfte abgestützt.

## Beschreibung

Die Erfindung betrifft eine Kabelstütze, gemäß dem Oberbegriff von Anspruch 1.

Für an Bauwerken angeordnete Stromerzeuger, wie beispielsweise Windkraftanlagen, Photovoltaik-Systeme, aber auch für starke elektrische Verbraucher, die an der Spitze eines Turms angeordnet sind, ist es erforderlich, große elektrische Ströme über eine Strecke von beispielsweise 100 m zu leiten. Typischerweise erstrecken sich derartige Türme im Wesentlichen vertikal.

Zwar ist es bekannt, durch Transformation die elektrische Spannung zu erhöhen und damit den für die Leistungsübertragung erforderlichen Strom zu reduzieren. Häufig muss dies aus verschiedenen Gründen jedoch bodennah geschehen, so dass die Übertragung elektrischer Leistung zwischen unterem Ende des Turm und dem oberen Ende des Turms mit großen Strömen, jedoch geringen Spannungen erfolgen muss.

Für die Bereitstellung derartiger Strompfade werden typischerweise massive Kupferkabel verwendet, die einen flachrechteckigen Querschnitt aufweisen. Derartige Kabel haben einen recht geringen Innenwiderstand. Nachteilig ist jedoch ihr vergleichsweise hohes Gewicht im Verhältnis zu ihrer Festigkeit.

Zur Verbesserung der Festigkeit ist es bereits vorgeschlagen worden, für derartige spezielle Anwendungsfälle anstelle von metallischem Kupfer eine Kupferlegierung zu verwenden, oder eine Aluminiumlegierung. Aluminium hat einen wesentlich höheren Innenwiderstand, so dass diese Lösung häufig aus Platzgründen problematisch ist, und die bekannten Kupferlegierungen mit verbesserter Festigkeit haben ebenfalls eine geringere Leitfähigkeit, so dass die Materialstärke erhöht werden muss, was wiederum aus Gewichtsgründen unbefriedigend ist.

Zwar käme es grundsätzlich in Betracht, für die hier zur Diskussion stehenden vertikalen Leistungsübertragung Supraleiter zu verwenden. Dies ist jedoch ausgesprochen teuer und bedarf auch spezieller Vorkehrungen, um einen stabilen Betrieb zu gewährleisten.

Um zu gewährleisten, dass das betreffende Kabel nicht aufgrund seines Eigengewichts reißt bzw. kollabiert, ist es bereits vorgeschlagen worden, die Kabel je als Teilstücke zu realisieren, die sicher aufgehängt sind. Der Übergang zwischen den einzelnen Teilstücken führt jedoch auch bei sorgfältiger Ausführung zu einem gegenüber einem glatten Kabelstrang vergrößerten Innenwiderstand und ist zudem aufwändig und wartungsintensiv.

Andererseits ist es bei der Konstruktion von Windkraftanlagen wünschenswert, die Konstruktion vergleichsweise steif, aber leicht zu realisieren.

Dementsprechend ist man bestrebt, einen möglichst geringen Materialeinsatz im Verhältnis zur Festigkeit und Steifheit der Konstruktion aufzubringen. Grund ist unter anderem, dass das Eigengewicht des Turms die Konstruktion im unteren Bereich belastet, so dass typischerweise unten mit einem größeren Materialeinsatz als oben gearbeitet werden muß.

Für derartige Türme, zu denen auch Antennentürme, einschließlich sogenannter Fernsehtürme, die häufig im oberen Bereich auch noch Drehrestaurants tragen, gehören, hat sich eine Betonbauweise bewährt, wobei der Turm aus einer Vielzahl von Einzel-Turmstücken von 10 bis 25 m zusammengesetz ist. Die Turmstücke sind über spezielle Flanschringe miteinander verbunden und bestehen aus speziellem Stahlbeton oder Spannbeton, so dass sie ein vergleichsweise geringes Gewicht im Verhältnis zu ihrer Festigkeit haben. Insbesondere wird hier die gute Druckfestigkeit von Beton ausgenutzt.

Beispielsweise ist aus der DE-GM 94 07 220 ein Turm aus Schleuderbetonrohren bekannt, bei der sich die Einzel-Turmstücke zwischen den dortigen Plattformen erstrecken. Zum Besteigen der Türme ist eine Steigleiter vorgesehen, die je außen oder innen an dem betreffenden rohrförmigen Turmstück angebracht ist,
wobei die genannte Veröffentlichung auch ein Umsteigen zwischen den drei Pfeilern vorsieht.

Zwar sind Einzelleitern bekannt, die sich durchaus über eine Länge von beispielsweise 15 m erstrecken können. Eine derartige Leiter wird typischerweise mit Haltern für diese Steigleiter angebracht, beispielsweise mit einem Halter für je drei Meter Steighöhe. Damit wird ein Durchbiegen der Leiter sicher verhindert, auch wenn beispielsweise drei Bedienpersonen das betreffende Teilstück oder die Einzelleiter gleichzeitig betreten.

Sowohl Stahl als auch Aluminium hat typischerweise einen anderen Wärmeausdehnungskoeffizient als Beton. Daher müssen die Befestigungselemente, insbesondere auch die Halter der Steigleiter die Hoch-Tief-Bewegung aufgrund von Temperaturveränderungen zwischen der Einzelleiter und dem Stahlbeton kompensieren können. Man bringt hierzu entsprechende Schiebeführungen an den Bolzen an, was vergleichsweise aufwändig ist.

Insbesondere ist auch nachteilig, dass die Bolzen die Betonhülle schwächen. Sie verlaufen regelmäßig zueinander fluchtend, so dass sie wie eine Art Perforation der Betonhülle wirken.

Um dennoch die erforderliche Sicherheit bereitstellen zu können, muss daher die Betonhülle mit einer größeren Wandstärke vorgesehen sein, als es statisch an sich erforderlich wäre.

Um diesen Nachteil hinsichtlich der Stärke des Betons zu vermeiden, ist es bereits vorgeschlagen worden, anstelle von Stehbolzen Klebeflächen zu verwenden. Diese müssen aufgrund der vergleichsweise großen Wirkungskräfte recht großflächig sein, beispielsweise 20 x 20 cm. Die Klebeflansche müssen zudem exakt der Biegung der Innenform des Turms folgend ausgebildet sein. Hier kommt erschwerend hinzu, dass der Turmdurchmesser häufig von unten nach oben abnimmt, so dass mit unterschiedlich gebogenen Klebeflanschen gearbeitet werden muß, und es darf keinenfalls zu Verwechslungen kommen, da bei unterschiedlichen Biegungen zwischen Klebeflansch und Innenseite des Turms eine nur sehr geringe Klebefläche vorliegt, so dass keine sichere Klebeverankerung gewährleistet ist.

Derartige Verklebungen haben sich daher nicht durchgesetzt, zumal auch derartige Klebeverbindungen recht empfindlich für Scherbelastungen sind, wie sie durch die Änderungen der Relativlänge von Betonschuß und Einzelleiter erzeugt werden.

Daher liegt der Erfindung die Aufgabe zugrunde, eine Kabelstütze gemäß dem Oberbegriff von Anspruch 1 zu schaffen, die ein besseres Gewichts-/Festigkeitsverhältnis eines Turms, in dem die Kabelstütze realisiert ist, ermöglicht, wobei dennoch ein geringer Innenwiderstand des Kabels möglich sein soll.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass die erfindungsgemäße Kabelstütze Einzelleitern aufweist, die sich halterfrei zwischen Flanschen des Turms erstrecken. Jede Einzelleiter ist oben an einer Aufhängung an dem betreffenden Flansch oder der Plattform aufgehängt.

Unten, also an dem nächst darunterliegendem Flansch des Einzel-Turmstücks ist vorzugsweise eine Abstützung gegen Horizontalkräfte vorgesehen.

Die erfindungsgemäße Kabelstütze ist so ausgebildet, dass jedes beispielsweise aus Kupfer bestehende Generatorkabel entweder hängt oder unten aufsteht bzw. in einer Kabelführung gehalten ist. Jede Einzelleiter ist bevorzugt hängend ausgebildet, und über eine entsprechende Kabelklemmleiste lässt sich die Vertikalbewegung aufgrund von Temperaturschwankungen realisieren.

In bevorzugter Ausgestaltung sind die Kabel zusammen mit den Einzelleitern hängend befestigt. Diese Lösung ermöglicht eine sichere und knickfeste Realisierung der Kabel und deren Lagerung.

Überraschend ergibt sich auch bei der Kombination zwischen der hängenden Realisierung der das Kabel aussteifenden Einzelleiter und der stehenden Realisierung des Kabels eine besonders gute Aussteifung, die auch bei großen Höhen der Windkraftanlagen von beispielsweise 150 m die einstückige Realisierung der Kabel ermöglicht, ohne dass die Gefahr bestände, dass die Kabel aufgrund ihres Eigengewichts einknicken.

In vorteilhafter Ausgestaltung können die Kabel an den Flanschen zusätzlich aufgehängt sein. Dies ist besonders bei sehr dicken Kabeln wünschenswert, denn bei einer Kabelstärke von 20 mm und einer Breite von 100 mm wiegt ein Kabel bei einer Länge von 20 m bereits 350 kg.

Typische Generatoren verwenden vier Kabel, die in besonders vorteilhafter Ausgestaltung im Innenraum der Kabelstützleiter eingebracht und isoliert sein können. Hierzu sind die Sprossen der Einzelleiter nach hinten, also zur Stahl- oder Betonwand hin versetzt, und zwar so, dass sie ausreichend Platz für die Aufnahme der Kabel nebeneinander lassen. Beispielsweise können die Holme im Schnitt betrachtet durch die Sprossen im Verhältnis von 1 zu 3 oder 1 zu 2 geteilt sein, so dass die Sprossen am Ende des letzten Drittels oder Viertels der Holmstärke zu liegen kommen.

Der Sprossenabstand kann erfindungsgemäß in beliebiger geeigneter Weise gewählt sein. Beispielsweise kann er das Drei- bis Siebenfache, bevorzugt das Fünffache eines Norm-Sprossenabstands einer Steigleiter betragen, also bevorzugt 1,40 m. Die Sprossen stützen hier dann die Kabelklemmleiste zusammen mit dem Generatorkabel gegen Durchbiegung ab.

Es versteht sich, dass die unterschiedlichen Materialstreckungen bzw. -kürzungen aufgrund von Temperaturveränderungen erfindungsgemäß berücksichtigt werden müssen. So ist es bevorzugt, dass die Kabel in den Kabelklemmleisten vertikal beweglich geführt sind.

In diesem Zusammenhang ist es auch bevorzugt, unten an der Einzelleiter einen Dehnspalt vorzusehen, an welchem die Leiternholme bei kälteren Temperaturen einen deutlichen Abstand von den Leiternholmen der nächstunteren Einzelleiter haben.

Bevorzugt wird seewasserfestes Aluminium für die Leiternholme und Sprossen verwendet, das einen größeren Wärmeausdehnungskoeffizient als Beton aber etwa den gleichen wie Stahl hat. Der zulässige Betriebstemperaturbereich von beispielsweise -30°C bis +50°C lässt sich durch einen Dehnspalt von etwas über 3 % der Leiternlänge ohne weiteres einhalten; die Leiternstreckung aufgrund der Belastung durch die drei Bedienpersonen liegt eine Größenordnung unter der maximalen thermischen Dehnung.

Erfindungsgemäß besonders günstig ist es, dass durch die Aufhängung der Einzelleiter je eine geringere Materialstärke für die Holme erforderlich ist als bei einer Stehleiter. Insbesondere lässt sich sicher verhindern, dass die Leiter durch Belastung einknickt. Die geringere erforderliche Holmstärke der Leiter führt jedoch auch zu einem geringeren Leitereigengewicht, was wiederum dem Vorteil zugute kommt, dass die Konstruktion insgesamt leichter ist und den Turm insofern auch weniger belastet.

Durch den Verzicht auf Klebehalterungen lässt sich die Montage wesentlich erleichtern, und durch den Verzicht auf Stehbolzen lässt sich die Wandstärke des Stahlrohres oder der Betonhülle auf das minimal Mögliche reduzieren. Auch ist die Fehlerquote geringer, nach dem die Bolzen entfallen und nicht gesondert eingebaut werden müssen.

Die Leitern selbst können vergleichsweise schnell und leicht gewartet und überprüft werden, denn die bislang erforderliche aufwändige Überprüfung jedes einzelnen Stehbolzen kann erfindungsgemäß entfallen.

In besonders günstiger weise lässt sich eine erfindungsgemäße Leiter über ihre Sprossen aufhängen. Sprossen sind bei dieser vorteilhaften Ausgestaltung in an sich bekannter Weise hohl; sie können von Verankerungsstäben ohne weiteres durchtreten werden, so dass die Leiter erfindungsgemäß über die Sprosse am Holm sicher aufhängbar ist.

Gleiches gilt im Grunde für die Horizontalabstützung unten an der Einzelleiter, wobei es hier gegebenenfalls auch ausreicht, eine Verankerung lediglich über eine Sprosse zu realisieren.

Weitere Vorteile, Einzelheiten und Merkmale ergeben sich aus den nachfolgenden Beschreibungen eines Ausführungsbeispiels der Erfindung anhand der Zeichnung.

Es zeigen:
- Fig. 1: eine schematische Ansicht einer erfindungsgemäßen Kabelstütze, unter Darstellung eines Teilstücks, in der Ansicht von vorne;

- Fig. 2: ein horizontal liegender Schnitt durch eine erfindungsgemäße Kabelstütze;
- Fig. 3: eine Detailansicht einer erfindungsgemäßen Kabelstütze, nämlich der Aufhängung; und
- Fig. 4: eine Seitenansicht eines weiteren Details einer Ausführungsform der erfindungsgemäßen Kabelstütze, nämlich der Horizontalabstützung und Vertikalführung am unteren Ende der Einzelleiter.

Das in den Figuren dargestellte Ausführungsbeispiel weist eine Kabelstütze 10 auf, die innen in einem Turm 12 einer Windkraftanlage angebracht ist. Der Turm 12 besteht aus einer Mehrzahl, beispielsweise fünf, übereinander angeordnet zueinander ausgerichteten Einzel-Turmstücken, die je mit einem Flansch 14 miteinander verbunden sind. In dem dargestellten Ausführungsbeispiel besteht der Turm aus Stahlrohren mit entsprechendem Durchmesser, wobei es sich auch versteht, dass anstelle dessen auch eine Betonkonstruktion möglich ist.

Der Flansch 14 erstreckt sich kreisringförmig und außen bündig mit den Einzel-Turmstücken. Die erfindungsgemäße Kabelstütze 10 erstreckt sich in einem Abstand, der 10 bis 40 cm betragen kann und beispielsweise etwa 20 cm beträgt vor dem Turm 12. Die Kabelstütze 10 weist in an sich bekannter Weise Holme 16 und 18 auf, zwischen denen sich Sprossen erstrecken.

In dem dargestellten Ausführungsbeispiel weisen die Sprossen einen im Wesentlichen quadratischen Querschnitt mit abgerundeten Ecken auf.

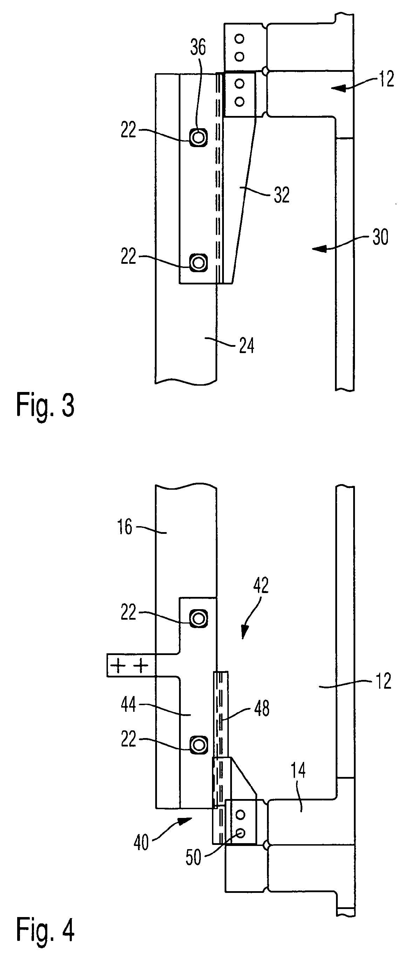

Die Sprossen 20 sind in einem gegenüber eines üblichen Leiters wesentlich vergrößerten Abstand angeordnet. In dem dargestellten Ausführungsbeispiel beträgt der Abstand der Sprossen 20 je 1,40 m voneinander. Demgegenüber sind an dem oberen Ende der Einzelleiter 24 zwei Doppelsprossen 22 angebracht, ebenso wie an dem unteren Ende, deren Bedeutung anhand von Fig. 3 und 4 erläutert wird.

Bevorzugt ist es, wenn die Holme doppelwandig ausgebildet sind und die Sprossen unter Vorspannung beim Durchtreten beider Holmwände endseitig umgebördelt sind. Wenn dann innen der Umbördelung gegenüberliegend die Sprossen der Holmwand benachbart auch noch aufgeweitet sind, liegt eine sehr feste und steife Konstruktion vor, die dennoch vergleichsweise leichtgewichtig ist und zudem preisgünstig herzustellen ist. Derartige Leitern sind erfindungsgemäß als Hängeleitern bevorzugt,
wobei es sich jedoch versteht, dass auch nach Wahl des Kunden andere Leiterntypen, bei Bedarf sogar mit Stufen, in Betracht kommen.

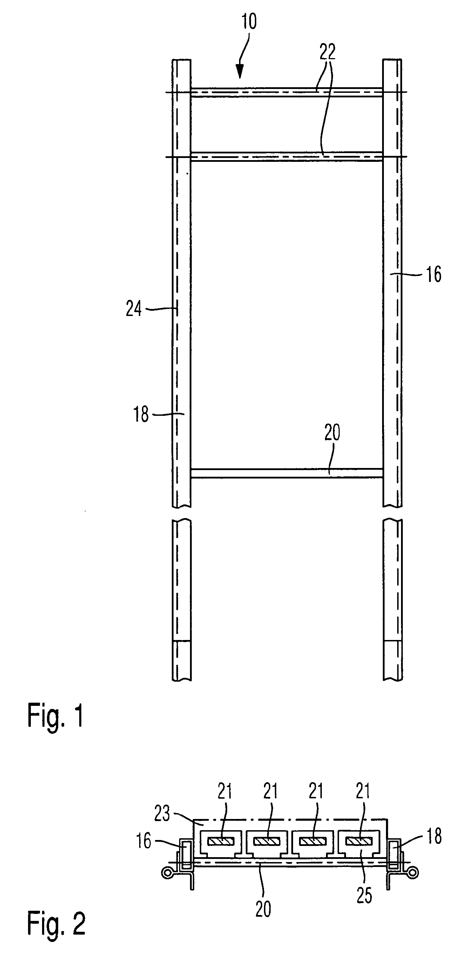

Aus Fig. 2 ist ein Kabelstütze 10 im Schnitt ersichtlich. Fig. 2 zeigt, dass die Sprossen 20, aber auch die Sprossen 22 nach rückwärts, also zur Wand hin, verlagert sind. Hierdurch wird Raum geschaffen für die Aufnahme von vier Generatorkabeln 21, die in einer Kabelklemmleiste 23 geführt sind. Die Kabelklemmleiste 23 füllt praktisch den gesamten Innenraum zwischen den Holmen 16 und 18 aus und steht gegenüber den Holmen auch noch vor. In dem dargestellten Ausführungsbeispiel sind die Generatorkabel 21 je mit einer Isolierung 25 umhüllt, die so dick ist, dass sie sich etwa bündig zur Vorderkante der Holme 16 und 18 erstrecken. Es versteht sich, dass die Stärke der Holme und die Dimensionierung im Übrigen in weiten Bereichen an die Erfordernisse anpaßbar ist.

Die je zweiwandigen Holme sind in Fig. 2 im Wesentlichen rechteckig dargestellt. Die Innenwand springt jedoch der Sprosse benachbart etwas zurück, und an dieser Stelle greift ein Steg der Kabelklemmleiste ein, der praktisch eine Art Horizontalabstützung für die Kabelklemmleiste 23 und damit die Kabel bildet. Diese Lösung erlaubt eine Vertikalführung zwischen den Holmen - und damit der Einzelleiter 24 - und den Kabeln 21.

Aus Fig. 2 ist ersichtlich, in welcher Weise eine Aufhängung 30 für die Einzelleiter 24 an dem Flansch 14 realisiert sein kann. Der Flansch 14 weist bauseitig ein Schwert 32 auf, das sich über eine Höhe von beispielsweise 30 oder 35 cm nach unten erstreckt. Das Schwert 32 ist mit zwei Schraubbolzen 34 an dem Flansch 14 gelagert. In dem dargestellten Ausführungsbeispiel erfolgt die Aufhängung 30 über Stäbe 36, die die Sprossen 20 je durchtreten und seitlich an dem Schwert 32 befestigt sind. Das Schwert ist in der Draufsicht im Wesentlichen U-förmig und umgreift die Holme 16 und 18 der Einzeleiter 14. Bevorzugt ist an den Stäben 36 ein Gewinde vorgesehen, so dass die Stäbe 36 auch als Gewindestangen ausgebildet sein können. Ihr Durchmesser ist so bemessen, dass er in satter Anlage in die hohlen Sprossen 30 passt; dem steht nicht entgegen, dass die Sprossen 20 in dem dargestellten Ausführungsbeispiel im Wesentlichen quadratisch, die Stäbe 36 hingegen rund sind.

Durch die Aufteilung der Hängekraft auf zwei Stäbe 36 wird die Krafteinleitung vergleichmäßigt; die Einzelleiter 24 hängt über ihre gesamte Höhe von beispielsweise 24 m an der Aufhängung 30, die dementsprechend das Gewicht der Leiter abstützt, sowie gegebenenfalls zusätzlich die Belastung durch eine Bedienperson oder mehrere Bedienpersonen, was regelmäßig nur kurzzeitig erfolgt.

Aus Fig. 3 ist ersichtlich, in welcher Weise eine Horizontalabstützung 40 unten am Ende der Leiter ausgebildet sein kann. Die Horizontalabstützung 40 weist eine Vertikalführung 42 auf, die eine vertikale Relativbewegung zwischen dem unteren Ende 44 der Leiter und dem dortigen Flansch 14 des Turms 12 ermöglicht. Die Vertikalführung 42 besteht aus seitlich der Holme 16 und 18 angebrachten Hülsen 46, in denen ein holmfester Stab je vertikal geführt ist. Hierdurch lässt sich eine Abstützung der Kräfte weg von der Betonwand des Turms 12 als auch zur Betonwand des Turm 12 hin sicher gewährleisten, also eine Abstützung gegen Horizontalkräfte, wobei es sich versteht, dass die Hülse 46 an dem Flansch 14 über Schraubbolzen 50 befestigt ist.

## Patentansprüche

1. Kabelstütze, insbesondere für die Abstützung der Generatorkabel von Windkraftanlagen, mit einer Stützleiter, die mehrere Einzelleitern aufweist, die je für sich gelagert sind, **dadurch gekennzeichnet, dass** die Einzelleiter (24) als Hängeleiter oben an einer Aufhängung (30) aufgehängt ist und bei der insbesondere vorgesehen ist, dass sie unterhalb der Aufhängung (30), insbesondere nahe ihres unteren Endes (44), über eine Horizontalabstützung (40) gegen Horizontalkräfte abgestützt ist.

2. Kabelstütze nach Anspruch 1, **dadurch gekennzeichnet, dass** die Einzelleiter asymmetrische Sprossen (20; 22) aufweist, die gegenüber der Holmmittelebene zurückversetzt sind, insbesondere etwa um eine Sprossenstärke.

3. Kabelstütze nach einem der vorhergehenden Ansprüche, **dadurch gekennzeichnet, dass** eine Mehrzahl, insbesondere vier, von Kabeln (21) für die Windkraftanlage zwischen den Leiterholmen (16, 18) aufgenommen ist und insbesondere über eine Kabelklemmleiste (23) dort befestigt ist.

4. Kabelstütze nach einem der vorhergehenden Ansprüche, **dadurch gekennzeichnet, dass** die Generatorkabel (21) als massive Flachkabel ausgebildet sind, die sich in einer Ebene zueinander, insbesondere parallel zu den Sprossen (20; 22) der Leiter, erstrecken.

5. Kabelstütze nach einem der vorhergehenden Ansprüche, **dadurch gekennzeichnet, dass** auf der Vorderseite der Leiter (24) zwischen den Holmen ein Kabelkanal ausgebildet ist, der mit Isoliermaterial der Generatorkabel und den Kabeln selbst gefüllt ist.

6. Kabelstütze nach einem der vorhergehenden Ansprüche, **dadurch gekennzeichnet, dass** ein zwischen Holmen (16, 18) der Leiter (24) gebildeter Kabelkanal eine Abdeckung für eine Kabelklemmleiste (23) aufweist und dass die Kabelklemmleiste je an einem Holm (16, 18) innen befestigt ist.

7. Kabelstütze nach Anspruch 1, **dadurch gekennzeichnet, dass** der Turm (12) aus einer Vielzahl von Einzel-Turmstücken besteht, die über Flansche (14) miteinander verbunden sind und dass jede Aufhängung (30) einer jeden Einzelleiter (24) an einem Flansch (14) vorgesehen ist.

8. Kabelstütze nach einem der vorhergehenden Ansprüche, **dadurch gekennzeichnet, dass** die Einzelleitern (24) über ihren Verlauf frei von Befestigungen und/oder Verankerungen sind.

9. Kabelstütze nach einem der vorhergehenden Ansprüche, **dadurch gekennzeichnet, dass** die Aufhängung (30) auf mindestens zwei Stufen oder Sprossen (20; 22) der Einzelleiter.wirkt, insbesondere auf die beiden obersten Stufen oder Sprossen (20; 22).

10. Kabelstütze nach einem der vorhergehenden Ansprüche,
**dadurch gekennzeichnet, dass** an dem unteren Ende der Einzelleiter (24) eine Vertikalführung (42) gelagert ist, über welche eine vertikale Bewegung des unteren Endes der Einzelleiter (24) ausgleichbar ist.

11. Kabelstütze nach einem der vorhergehenden Ansprüche,
**dadurch gekennzeichnet, dass** die Aufhängung (30) jeder Einzelleiter (24) vertikal einstellbar ist und dass die Höheneinstellung der Einzelleiter passend zum Stufenraster der nächstunteren Einzelleiter eingestellt wird.

12. Kabelstütze nach einem der vorhergehenden Ansprüche,
**dadurch gekennzeichnet, dass** die Einzelleitern (24) - gegebenenfalls abgesehen von der untersten Einzelleiter - eine Länge von mehr als 15 m, insbesondere mehr als 20 m und bevorzugt etwa 25 m aufweisen.

13. Kabelstütze nach einem der vorhergehenden Ansprüche,
**dadurch gekennzeichnet, dass** jede Einzelleiter (24) eine Mehrzahl von miteinander verlaschten Einzelleiterstücken aufweist und dass die Laschen ein Biege-Widerstandselement aufweisen, das mindestens dem Biege-Widerstandselement von Holmen der Einzelleiter entspricht.

14. Kabelstütze nach einem der vorhergehenden Ansprüche,
**dadurch gekennzeichnet, dass** jede Einzelleiter (24) eine Vielzahl von Sprossen (20; 22) und zwei Holme aufweist, wobei die Sprossen-/Holmverbindung unter Vorspannung realisiert ist und insbesondere die Sprosse einer Holm-Seitenwand benachbart innen aufgeweitet ist.

15. Kabelstütze nach einem der vorhergehenden Ansprüche,
**dadurch gekennzeichnet, dass** jede Einzelleiter (24) von der nächstbenachbarten Leiter beabstandet aufgehängt ist, wobei der Abstand 2 bis 5 und bevorzugt etwa 3,5 % der Leiterlänge beträgt.

16. Kabelstütze nach einem der vorhergehenden Ansprüche,
**dadurch gekennzeichnet, dass** die Horizontalabstützung (40) am unteren Ende (44) der Einzelleitern (24) eine Buchse (46) aufweist, die vertikal ausgerichtet ist und über welche das untere Ende der Einzelleiter (24) gegen horizontal wirkende Kräfte abgestützt ist.

17. Kabelstütze nach einem der vorhergehenden Ansprüche,
**dadurch gekennzeichnet, dass** eine Hülse (46) für die Horizontalabstützung (40) des unteren.Endes der Einzelleiter je an einem Holm (16 und 18) der Einzelleiter angeflanscht ist und ein in der Hülse (46) schiebebeweglich geführter Haltestab (48) an dem Flansch (14) des Turms (12) befestigt ist.

18. Kabelstütze nach einem der vorhergehenden Ansprüche,
**dadurch gekennzeichnet, dass** die Aufhängung (30) und/oder die Horizontalabstützung (40) jeder Einzelleiter (24) an bauseitigen Schwertern (32) vorgesehen ist.
